# EUROPEAN PATENT APPLICATION

(11) **EP 4 651 266 A1**
(43) Date of publication of application: **19.11.2025**
(21) Application number: 25172874.7
(22) Date of filing: 28.04.2025
(51) Int. Cl.: H01M 10/54, H01M 4/505, C01D 15/02, C01D 15/08, C02F 1/44, C02F 1/66, C22B 3/26, C22B 3/44, C22B 7/00, C22B 26/12

(54) **METHOD OF RECOVERING LITHIUM PRECURSOR, METHOD OF PREPARING POSITIVE ELECTRODE ACTIVE MATERIAL, AND RECHARGEABLE LITHIUM BATTERY**

(30) Priority: 14.05.2024 KR 20240063032
(71) Applicant: SAMSUNG SDI CO., LTD., Yongin-si, Gyeonggi-do 17084 (KR)
(72) Inventor: SOHN, Myungbeom, 17084 Yongin-si (KR); YOU, Yongchan, 17084 Yongin-si (KR); LEE, Youngjun, 17084 Yongin-si (KR); YOO, Kwangyong, 17084 Yongin-si (KR); PARK, Seongin, 17084 Yongin-si (KR)
(74) Representative: Marks & Clerk LLP

(57) **Abstract**

Disclosed are methods of recovering lithium precursors, methods of preparing positive electrode active materials, and rechargeable lithium batteries. The method of recovering a lithium precursor comprises preparing a first solution that includes lithium ions and transition metal ions, preparing a second solution by mixing the first solution and a first basic reagent, preparing a third solution by extracting a transition metal from the second solution, preparing a fourth solution by mixing the third solution and a second basic reagent, and extracting the lithium precursor from the fourth solution. The first basic reagent is prepared using a waste solution produced in a washing process of a positive electrode active material.

## Description

### BACKGROUND

The present disclosure relates to a method of recovering a lithium precursor from waste related to a rechargeable lithium battery. More particularly, the present disclosure relates to a method of recovering a lithium precursor from a waste solution produced in a washing process of a positive electrode active material.

A rechargeable lithium battery is utilized as energy storage and supply sources in various fields. Rechargeable lithium batteries are widely used as energy storage and supply sources for portable apparatuses such as mobile phones, tablet PCs, wearable devices, laptop computers, digital cameras, and power tools. Rechargeable lithium batteries are also used in transportation means such as hybrid cars, electric cars, and electric boards. Recently, applications of rechargeable lithium batteries have expanded to future industries such as drones, robots, and urban air mobility (UAM).

With growing awareness of climate change and increasing interest in environmental sustainability, the electric vehicle market has experienced significant growth, and consequently, the demand for rechargeable lithium batteries has risen sharply. However, since primary materials required for manufacturing rechargeable lithium batteries are often obtained from natural sources, environmental destruction and pollution inevitably occur during the raw material extraction process. Therefore, there is a need for the development of recycling technologies for raw materials used to manufacture rechargeable lithium batteries.

Thus, attention is being focused on methods of recovering valuable metals such as transition metal precursors and lithium precursors from rechargeable lithium battery-related waste including discarded rechargeable lithium batteries, waste generated during fabrication processes of rechargeable lithium batteries, and waste solutions produced in washing processes of positive electrode active materials of rechargeable lithium batteries. The recovered valuable metals may be recycled for fabricating rechargeable lithium batteries. Research and development efforts are actively being conducted to develop recycling methods that are more eco-friendly, cost-effective, and capable of recovering high concentrations of valuable metals.

Methods of recovering valuable metals from discarded rechargeable lithium batteries or waste generated during fabrication of rechargeable lithium batteries are being implemented in various ways. However, conventional methods have a problem with respect to the heavy use of alkaline solutions during the recovery process. A by-product produced from the alkaline solution induces environmental pollution, and, thus, alternatives are required to replace the alkaline solution.

Many methods are being implemented in various ways to recover lithium precursors from waste solutions generated in washing processes of positive electrode active materials. A large amount of lithium is contained in the waste solutions generated in washing processes of positive electrode active materials. However, conventional methods require separate processes to recover lithium precursors from the waste solutions. In addition, since no process typically achieves a 100% recovery rate, the preparation of the separate process inherently brings about lithium loss. Accordingly, there is a need for improved methods of recovering lithium precursors.

### SUMMARY

An embodiment of the present disclosure provides a method of recovering a lithium precursor, wherein a waste solution generated in a washing process of a positive electrode active material is used to recover lithium precursors from waste related to rechargeable lithium batteries. The method of recovering a lithium precursor helps solve environmental problems arising from the excessive use of alkaline solutions discussed above, economic issues associated with the necessity of separate processes, and efficiency concerns due to lithium loss.

An embodiment of the present disclosure provides a method of preparing a positive electrode active material including the recovered lithium precursor obtained through the recovery method and a rechargeable lithium battery including the positive electrode active material.

According to an embodiment of the present disclosure, a method of recovering a lithium precursor comprises: preparing a first solution that includes lithium ions and transition metal ions; preparing a second solution by mixing the first solution and a first basic reagent; preparing a third solution by extracting a transition metal from the second solution; preparing a fourth solution by mixing the third solution and a second basic reagent; and extracting the lithium precursor from the fourth solution. The first basic reagent is prepared using a waste solution produced in a washing process of a positive electrode active material.

According to an embodiment of the present disclosure, a method of preparing a positive electrode active material for a rechargeable lithium battery comprises: mixing and calcining a transition metal precursor and a lithium precursor that is recovered by the method discussed above; and washing the calcined mixture.

According to an embodiment of the present disclosure, a rechargeable lithium battery may comprise the positive electrode active material prepared according to the method discussed above.

### BRIEF DESCRIPTION OF DRAWINGS

FIG. 1 is a simplified conceptual diagram showing a rechargeable lithium battery according to an embodiment of the present disclosure.
FIGS. 2 to 5 are simplified diagrams showing rechargeable lithium batteries according to embodiments, with FIG. 2 showing a cylindrical battery, FIG. 3 showing a prismatic battery, and FIGS. 4 and 5 showing pouch-type batteries.
FIG. 6 is a flow chart showing a method of preparing a first basic reagent according to the present disclosure.
FIG. 7 is a flow chart showing a method of preparing a first solution according to the present disclosure.
FIG. 8 is a flow chart showing a method of preparing a second solution according to the present disclosure.
FIG. 9 is a flow chart showing a method of preparing a third solution according to the present disclosure.
FIG. 10 is a flow chart showing a method of preparing a fourth solution according to the present disclosure.
FIG. 11 is a flow chart showing a method of recovering a lithium precursor according to the present disclosure.
FIG. 12 is a graph showing X-ray diffraction (XRD) analysis results of lithium carbonate (Li₂CO₃) according to Embodiment 6-1 and Comparative Example 4.
FIG. 13 is a graph showing results of evaluating characteristic of rechargeable lithium batteries according to Embodiment 8-1, Embodiment 8-2, and Comparative Example 6.

### DETAILED DESCRIPTION OF EMBODIMENTS

In order to sufficiently understand the configuration and effect of the present disclosure, embodiments of the present disclosure will be described with reference to the accompanying drawings. It should be noted, however, that the present disclosure is not limited to the following embodiments and may be implemented in various forms. The embodiments are provided only to disclose the present disclosure and enable those skilled in the art fully understand the scope of the present disclosure.

In this description, it will be understood that, when an element is referred to as being on another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

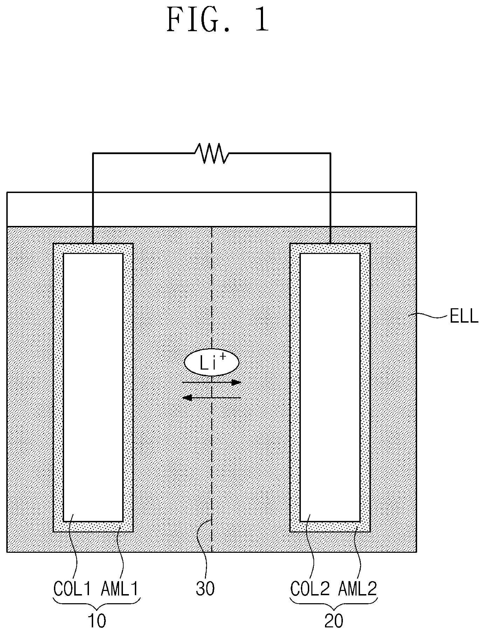

FIG. 1 is a simplified conceptual diagram showing a rechargeable lithium battery according to an embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. That is, the separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward either the positive electrode 10 or the negative electrode 20.

### Positive Electrode

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material. The positive electrode 10 may further include an additive that can serve as a sacrificial positive electrode.

An amount of the positive electrode active material may be about 90 wt% to about 99.5 wt% relative to 100 wt% of the positive electrode active material layer AML1. An amount of each of the binder and the conductive material may be about 0.5 wt% to about 5 wt% relative to 100 wt% of the positive electrode active material layer AML1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon. But the present disclosure is not limited to these examples.

The conductive material may be used to provide the electrode with conductivity, and any suitable conductive material that does not cause a chemical change in a battery may be used as the conductive material. The conductive material may include, for example, a carbon-based material such as natural graphite, artificial graphite, carbon black, acetylene black, Ketjen black, carbon fiber, carbon nano-fiber, and carbon nano-tube; a metal powder or metal fiber containing one or more of copper, nickel, aluminium, and silver; a conductive polymer such as a polyphenylene derivative; or a mixture thereof.

Aluminium (Al) may be used as the current collector COL1, but the present disclosure is not limited thereto.

### Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and a metal that is selected from cobalt, manganese, nickel, and a combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulas: LiₐA_{1-b}X_{b}O_{2-c}D_{c},where 0.90≤a≤1.8, 0≤b≤0.5, and 0≤c≤0.05; LiₐMn_{2-b}X_{b}O_{4-c}D_{c}, where 0.90≤a≤1.8, 0≤b≤0.5, and 0≤c≤0.05; LiₐNi_{1-b-c}Co_{b}X_{c}O_{2-α}D_{α}, where 0.90≤a≤1.8, 0≤b≤0.5, 0≤c≤0.5, and O<α<2; LiₐNi_{1-b-c}Mn_{b}X_{c}O_{2-α}D_{α}, where 0.90≤a≤1.8, 0≤b≤0.5, 0≤c≤0.5, and 0<α<2; LiₐNi_{b}Co_{c}L¹_{d}GₑO₂, where 0.90≤a≤1.8, 0≤b≤0.9, 0≤c≤0.5, 0≤d≤0.5, and 0≤e≤0.1; LiₐNiG_{b}O₂, where 0.90≤a≤1.8 and 0.001≤b≤0.1; LiₐCoG_{b}O₂, where 0.90≤a≤1.8 and 0.001≤b≤0.1; LiₐMn_{1-b}G_{b}O₂, where 0.90≤a≤1.8 and 0.001≤b≤0.1; LiₐMn₂G_{b}O₄, where 0.90≤a≤1.8 and 0.001≤b≤0.1; LiₐMn_{1-g}G_{g}PO₄, where 0.90≤a≤1.8 and 0≤g≤0.5; Li_{(3-f)}Fe₂(PO₄)₃, where 0≤f≤2; and LiₐFePO₄ where 0.90≤a≤1.8. In the chemical formulas, A is Ni, Co, Mn, or a combination thereof; X is Al, Ni, Co, Mn, Cr, Fe, Mg, Sr, V, a rare-earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be a high-nickel-based positive electrode active material having a nickel amount of greater than 60 mol%, equal to or greater than about 80 mol%, equal to or greater than about 85 mol%, equal to or greater than about 90 mol%, equal to or greater than about 91 mol%, or equal to or greater than about 94 mol% and equal to or less than about 99 mol%, relative to 100 mol% of metal of in the lithium transition metal composite oxide excluding lithium. The high-nickel-based positive electrode active material may provide high capacity and, thus may be applied to a high-capacity and high-density rechargeable lithium battery.

### Negative Electrode

The negative electrode 20 for a rechargeable lithium battery may include a current collector COL2 and a negative electrode active material layer AML2 positioned on the current collector COL2. The negative electrode active material layer AML2 may include a negative electrode active material and may further include a binder and/or a conductive material.

The negative electrode active material layer AML2 may include a negative electrode active material of about 90 wt% to about 99 wt%, a binder of about 0.5 wt% to about 5 wt%, and a conductive material of about 0 wt% to about 5 wt%.

The binder may serve to improve attachment of negative electrode active material particles to each other and also to improve attachment of the negative electrode active material to the current collector COL2. The binder may include a non-aqueous binder, an aqueous binder, a dry binder, or a combination thereof. The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof. The aqueous binder may include styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, polyvinylidene fluoride-hexafluoropropylene copolymer, polyethylene oxide, or a combination thereof.

The conductive material may be used to provide an electrode with conductivity, and any suitable conductive material that does not cause a chemical change in a battery may be used as the conductive material. For example, the conductive material may include a carbon-based material such as natural graphite, artificial graphite, carbon black, acetylene black, Ketjen black, carbon fiber, carbon nano-fiber, and carbon nano-tube; a metal powder or metal fiber including one or more of copper, nickel, aluminium, and silver; a conductive polymer such as a polyphenylene derivative; or a mixture thereof.

The current collector COL2 may include a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material. For example, the material may be crystalline carbon, amorphous carbon, or a combination thereof. The crystalline carbon may include graphite such as non-shaped, sheet-shaped, flake-shaped, sphere-shaped, or fiber-shaped natural or artificial graphite. The amorphous carbon may include soft carbon, hard carbon, mesophase pitch carbon, or calcined coke.

The lithium metal alloy may include an alloy of lithium and metal that is selected from Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include silicon, silicon-carbon composite, SiOx (where 0<x<2) Si-Q alloy, or a combination therefore. In the Si-Q alloy, Q is alkali metal, alkaline earth metal, Group 13 element, Group 14 element (except for Si), Group 15 element, Group 16 element, transition metal, a rare-earth element, or a combination thereof. The Sn-based negative electrode active material may include Sn, SnO₂, a Sn-based alloy, a combination thereof.

The silicon-carbon composite may be a composite of silicon and amorphous carbon. According to embodiments, the silicon-carbon composite may have a structure in which the amorphous carbon is coated on surfaces of the silicon particles. For example, the silicon-carbon composite may include secondary particles (cores) in which primary silicon particles are assembled, and an amorphous carbon coating layers (shell) provided on surfaces of the secondary particles. The amorphous carbon may also be positioned between the primary silicon particles. That is, the primary silicon particles may be coated with the amorphous carbon. The secondary particles may be dispersed in an amorphous carbon matrix.

The silicon-carbon composite may further include crystalline carbon. For example, the silicon-carbon composite may include cores including crystalline carbon and silicon particles and may also include an amorphous carbon coating layers provided on surfaces of the cores.

The Si-based negative electrode active material or the Sn-based negative electrode active material may be used in combination with a carbon-based negative electrode active material.

### Separator

Depending on the type of the rechargeable lithium battery, the separator 30 may be present between positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate, wherein the coating layer includes an organic material, an inorganic material, or a combination thereof.

The porous substrate may be a polymer layer including a polymer selected from polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, TEFLON^{®}, and polytetrafluoroethylene, or may be a copolymer or mixture including two or more of these materials.

The organic material may include a polyvinylidenefluoride-based copolymer or a (meth)acrylic copolymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof. But the present disclosure is not limited to these examples.

The organic material and the inorganic material may be present mixed in one coating layer or may be present as a stack of a coating layer including the organic material and a coating layer including an inorganic material.

### Electrolyte ELL

The electrolyte ELL for the rechargeable lithium battery may include a non-aqueous organic solvent and a lithium salt.

The non-aqueous organic solvent may serve as a medium for transmitting ions that participate in an electrochemical reaction of the battery.

The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, or caprolactone.

The ether-based solvent may include dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1,4-dioxolane; or sulfolanes.

The non-aqueous organic solvent may be used alone or in a mixture of two or more substances.

In addition, when a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in a battery and play a role in enabling a basic operation of a rechargeable lithium battery and in promoting the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB)

### Rechargeable Lithium Battery

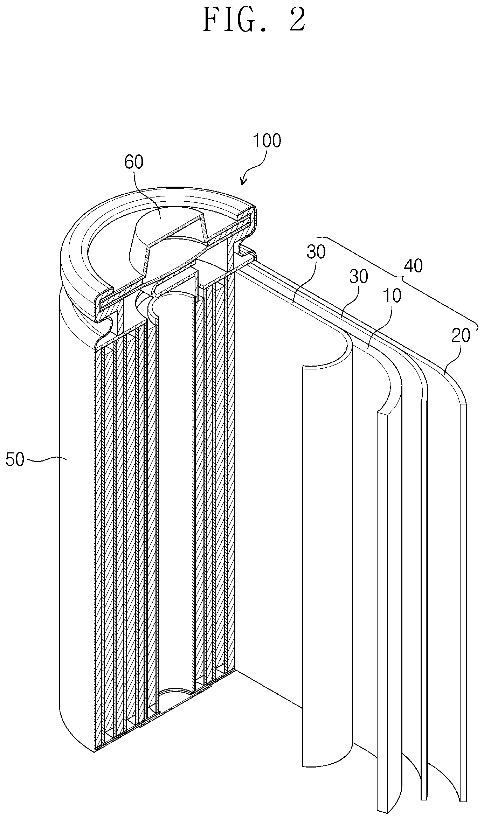

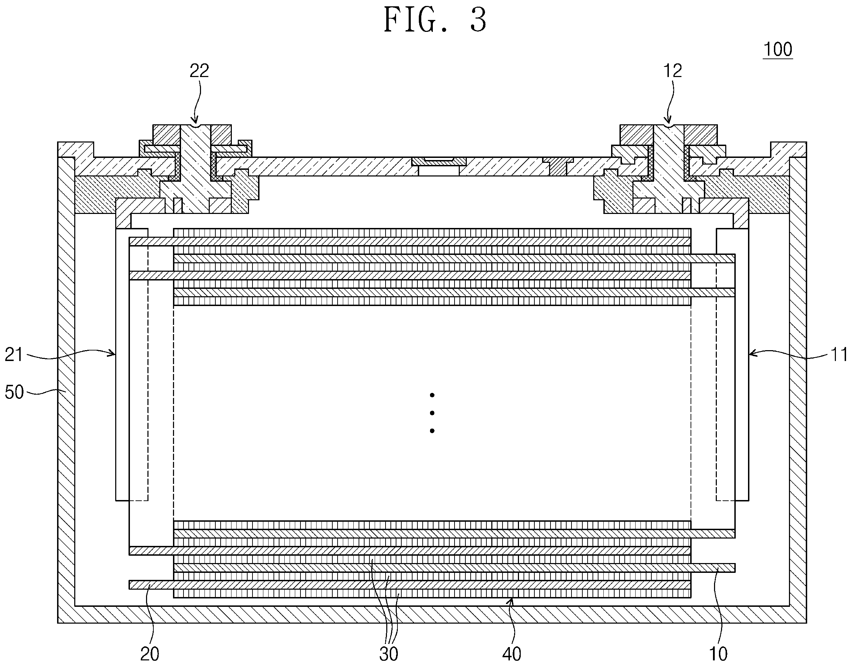

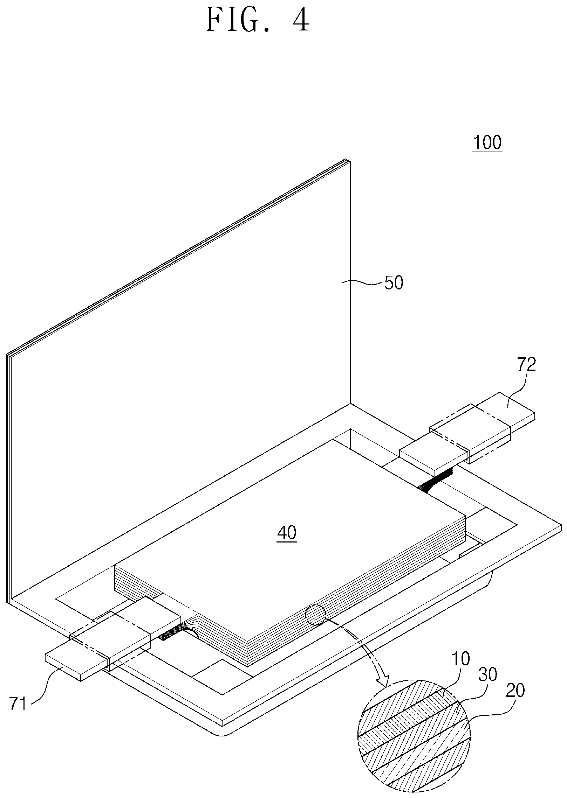

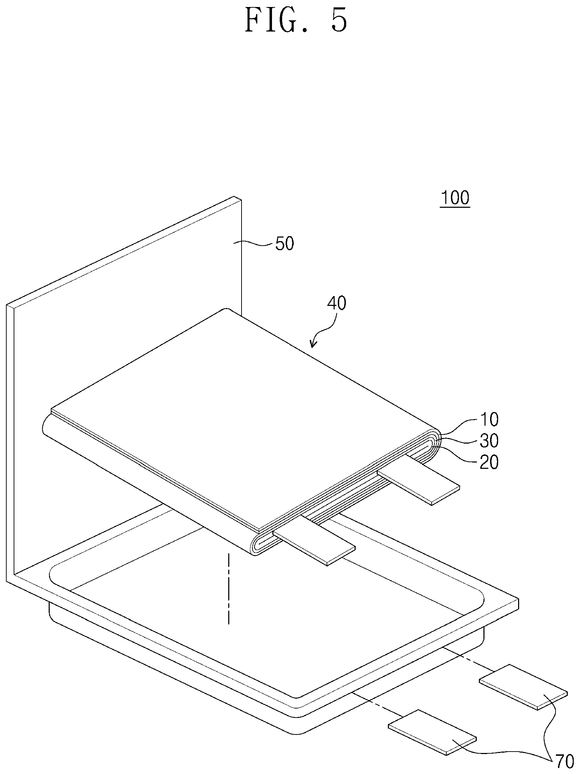

Based on shape of a rechargeable lithium battery, the rechargeable lithium battery may be classified into cylindrical, prismatic, pouch, and coin types. FIGS. 2 to 5 illustrate simplified diagrams showing rechargeable lithium batteries according to embodiments, with FIG. 2 showing a cylindrical battery, FIG. 3 showing a prismatic battery, and FIGS. 4 and 5 showing pouch-type batteries. Referring to FIGS. 2 to 5, a rechargeable lithium battery 100 may include an electrode assembly 40 in which a separator 30 is interposed between a positive electrode 10 and a negative electrode 20 and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, or a positive electrode tab 71 and a negative electrode tab 72, wherein the electrode tab 70 serves as an electrical path for inducing a current generated in the electrode assembly 40.

The rechargeable lithium battery according to an embodiment of the present disclosure may be used in automotive vehicles, mobile phones, and/or any other electrical devices. But the present disclosure is not limited to such uses.

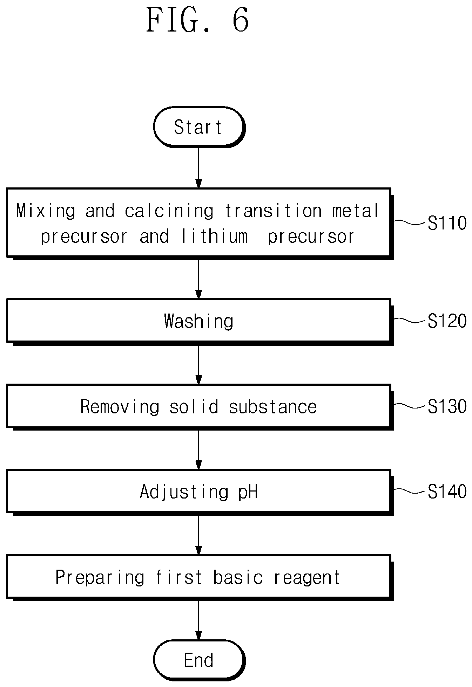

FIGS. 6 to 11 are flow charts showing methods of recovering a lithium precursor according to the present disclosure. With reference to FIGS. 6 to 11, the following will describe in detail methods of recovering a lithium precursor according to the present disclosure.

### Preparation of First Basic Reagent

FIG. 6 is a flow chart showing a method of preparing a first basic reagent according to the present disclosure. With reference to FIG. 6, the following description will focus on a preparation of the first basic reagent.

A preparation of a first basic reagent may include mixing and calcining a transition metal precursor and a lithium precursor (S110), washing a calcined first positive electrode active material with a washing solution (S120), removing a solid substance by recovering a waste solution produced after the washing (S130), and adjusting pH of the waste solution to be between 8 and 16 (S 140). As a result, a first basic reagent including a lithium ion may be prepared from the waste solution produced in the washing process of the first positive electrode active material.

The first positive electrode active material may be prepared by mixing and calcining the transition metal precursor and the lithium precursor (S110). The first positive electrode active material may be a positive electrode active material represented by Chemical Formula 2:

LiM5ₑM6_{f}M7_{g}M8ₕO₂

In Chemical Formula 2, e, f, g, and h may satisfy the relationship of 0≤e≤1, 0≤f≤1, 0≤g≤1, 0≤h≤1, and e+f+g+h=1. Each of M5, M6, M7, and M8 in Chemical Formula 2 may be an element selected from Ni, Co, Al, Cu, Mn, Ti, Mo, Zn, Zr, Si, Ge, V, Cr, B, Mg, Na, Sr, Ag, Nb, Ga, Ca, and Ba.

A surface of the calcined first positive electrode active material may be washed (S120). The washing process may remove a lithium byproduct that remains on a surface of the calcined first positive electrode active material. The washing solution used for the washing process may include distilled water or an alkaline solution. A waste solution may be generated after the washing process. The waste solution may include lithium hydroxide (LiOH) and/or lithium carbonate (Li₂CO₃) originating from the remaining lithium byproduct.

Although not shown in FIG. 6, after the mixing and calcination step (S110), if necessary, a coating layer may be formed on a particle surface of the first positive electrode active material. In an embodiment, the coating layer may include at least one of cobalt, aluminium, and zirconium. The formation of the coating layer may include adding a coating raw material and sodium hydroxide (NaOH). Therefore, the waste solution may additionally contain sodium hydroxide.

The waste solution generated after the washing process may be recovered to remove a solid substance (S130). The solid substance may include the first positive electrode active material and impurities incorporated during the washing process. The solid substance may be removed with a decanter (a centrifugal separator), a filter, or a filter press. In an embodiment, a filter paper applied to the filter or the filter press may have a pore size of about 0.5 µm to about 5 µm. Alternatively, a filter paper used in the filter or the filter press may be smaller than the D10 of the first positive electrode active material. The D10 of the first positive electrode active material may refer to a diameter of particles whose cumulative volume is 10 vol% from small particle sizes in the particle size distribution of the first positive electrode active material. The D10 may be measured by methods know to a person of ordinary skill in the art.

It is possible to adjust a pH range of the waste solution from which the solid substance is removed (S140). The pH adjustment (S140) may include adjusting the solution to be alkaline. In an embodiment, the waste solution may be adjusted to have a pH range of about 8 to about 16. Additionally, the waste solution may be adjusted to have a pH range of about 12 to about 16, or the waste solution may be adjusted to have a pH range of about 14 to about 16.

The pH adjustment (S140) may include adding alkaline hydroxide to the waste solution or evaporating the waste solution. The alkaline hydroxide may include one or more of sodium hydroxide (NaOH), lithium hydroxide (LiOH), and potassium hydroxide (KOH). However, the alkaline hydroxide is not limited to the examples and may include any hydroxide that exhibits alkalinity.

The first basic reagent prepared through the procedure above may contain a high concentration of lithium ions. In an embodiment, the concentration of lithium ions in the first basic reagent may range from about 1,000 ppm to about 10,000 ppm. Alternatively, the concentration of lithium ions in the first basic reagent may range from about 3,000 ppm to about 10,000 ppm. Further, the concentration of lithium ions in the first basic reagent may range from about 6,000 ppm to about 10,000 ppm. The concentration of lithium ions in the first basic reagent may indicate a weight of lithium ions included in the first basic reagent relative to the total weight of the first basic reagent. The concentration of lithium ions may be measured by using, for example, inductively coupled plasma mass spectrometry (ICP-MS).

The first basic reagent may include either no impurity ions or a low concentration of impurity ions. The impurity ions may denote ions other than lithium ions. For example, the impurity ions may include sodium ions. In an embodiment, a concentration of the impurity ions in the first basic reagent may be equal to or less than about 15,000 ppm. In another embodiment, a concentration of the impurity ions in the first basic reagent may be between about 20 ppm and about 14,000 ppm. In another embodiment, a concentration of the impurity ions in the first basic reagent may be between about 20 ppm and about 6,000 ppm. The concentration of impurity ions in the first basic reagent may indicate a weight of impurity ions included in the first basic reagent relative to the total weight of the first basic reagent.

In the step S110 of mixing and calcining the transition metal precursor and the lithium precursor, the lithium precursor may be extracted according to a lithium precursor extraction method of the present disclosure. For example, a waste solution, which is generated in a process for washing a positive electrode active material prepared using a lithium precursor extracted according to the present disclosure, may be reused as a raw material for preparing the first basic reagent of the present disclosure.

### Preparation of First Solution

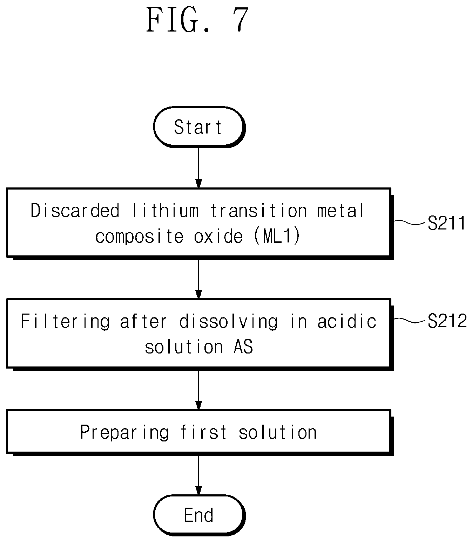

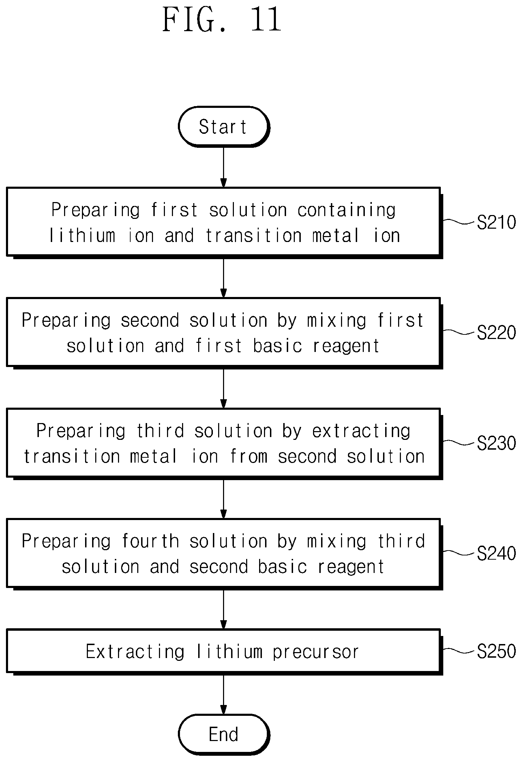

FIG. 11 is a flow chart showing a method of recovering a lithium precursor according to the present disclosure. FIG. 7 is a flow chart showing in detail a step of preparing a first solution containing a lithium ion and a transition metal ion (S210 of in FIG. 11). With reference to FIGS. 7 and 11, the following will describe in detail a step S210 of preparing a first solution according to the present disclosure.

Referring to FIG. 7, a step of preparing a first solution may include preparing a discarded lithium transition metal composite oxide ML1 (S211) and filtering after dissolving the discarded lithium transition metal composite oxide ML1 in an acidic solution AS (S212). As a result, the first solution including a lithium ion and a transition metal ion may be prepared from the discarded lithium transition metal composite oxide ML1.

The discarded lithium transition metal composite oxide ML1 may originate from a powdered discarded rechargeable lithium battery or a waste generated during fabrication process of rechargeable lithium batteries. The discarded lithium transition metal composite oxide ML1 may include a compound expressed by Chemical Formula 1:

LiM1ₐM2_{b}M3_{c}M4_{d}O₂

In Chemical Formula 1, a, b, c, and d may satisfy the relationship of 0≤a≤1, 0≤b≤1, 0≤c≤1, 0≤d≤1, and a+b+c+d=1. Each of M1, M2, M3, and M4 in Chemical Formula 1 may be an element selected from Ni, Co, Al, Cu, Mn, Ti, Mo, Zn, Zr, Si, Ge, V, Cr, B, Mg, Na, Sr, Ag, Nb, Ga, Ca, and Ba.

The discarded lithium transition metal composite oxide ML1 may include nickel. In an embodiment, the discarded lithium transition metal composite oxide ML1 may be an NCA-based oxide including nickel, cobalt, and aluminium, or an NCM-based oxide including nickel, cobalt, and manganese.

Among potential sources that can serve as raw materials for the discarded lithium transition metal composite oxide ML1, a powdered rechargeable lithium battery may be obtained by grinding and thermally treating a discarded rechargeable lithium battery. The powdered rechargeable lithium battery may include materials originated from a positive electrode, a negative electrode, a separator, and an electrolyte. In an embodiment, the material originated from the positive electrode may be aluminium. The material originated from the negative electrode may be copper.

Other potential sources that can serve as raw materials of the discarded lithium transition metal composite oxide ML1 include waste generated during fabrication process of a rechargeable lithium battery may be obtained by grinding and thermally treating a positive electrode active material and/or a positive electrode. Alternatively, waste generated during the fabrication process of a rechargeable lithium battery may be obtained from solid-liquid separation and heat treatment of a positive electrode slurry. The waste generated during the fabrication process of a rechargeable lithium battery may include materials originating from a positive electrode active material, a positive electrode, and a positive electrode slurry. In an embodiment, the material originating from the positive electrode active material may be nickel.

The acidic solution AS may include at least one of sulfuric acid (H₂SO₄), hydrochloric acid (HCl), nitric acid (HNO₃), and phosphoric acid (H₃PO₄). When the acidic solution AS is introduced, hydrogen peroxide (H₂O₂) and/or sulfur dioxide (SO₂) may also be introduced to accelerate dissolution of transition metal.

If necessary, after the dissolving and filtering step (S212), a step may be included in which a manganese extractant is introduced to extract a manganese ion. The manganese extractant may be a phosphate compound. For example, di-(2-ethylhexyl)phosphoric acid (D2EHPA) may be introduced to extract manganese ions. Manganese, which has low recovery value, may be extracted in advance using a manganese extractant in a low pH range immediately after being dissolved in the acidic solution AS as described above. This may prevent manganese ions from being simultaneously extracted during a subsequent extraction of transition metals such as cobalt and nickel, which have high recovery rate, and may increase a concentration of lithium ions.

### Preparation of Second Solution

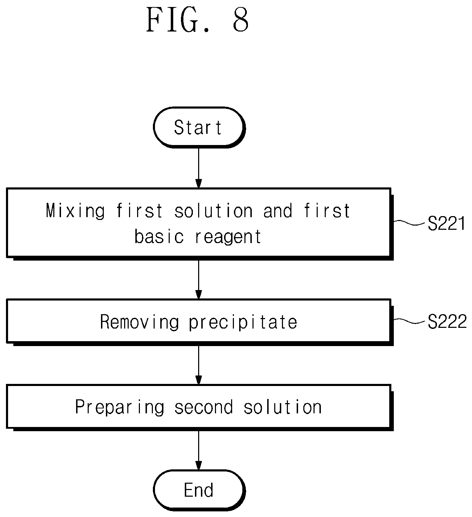

FIG. 11 is a flow chart showing a method of recovering a lithium precursor according to the present disclosure. FIG. 8 is a flow chart showing in detail a step of mixing a first solution and a first basic reagent to prepare a second solution (S220 of FIG. 11). With reference to FIGS. 8 and 11, the following will describe in detail a step (S220) of preparing a second solution according to the present disclosure.

Referring to FIG. 8, a step of preparing a second solution may include mixing the first solution and the first basic reagent (S221) and then removing a precipitate produced after the mixing (S222).

The mixing of the first solution and the first basic reagent (S221) may be performed while the second solution maintains a pH range where any of manganese, cobalt, and nickel ions are not easily precipitated. In an embodiment, a mixing ratio of the first solution and the first basic reagent may be adjusted to perform the mixing step while the second solution maintains a pH range of about 3 to about 4. In this case, iron may be precipitated as Fe(OH)₃ while manganese, cobalt, and nickel maintain their ionic state.

A precipitate that is produced after the mixing of the first solution and the first basic reagent (S222) may be removed. The precipitate may include an element other than manganese, cobalt, and nickel among transition metals. In an embodiment, the precipitate may include iron, aluminium, copper, zinc, magnesium, and/or calcium. The precipitate may include divalent and/or trivalent transition metals other than manganese, cobalt, and nickel. In an embodiment, the precipitate may include aluminium hydroxide (Al(OH)₃) and/or copper hydroxide (Cu(OH)₂).

The removal of the precipitate may include filtration. In an embodiment, the filtration of the precipitate may be accomplished by using a solid-liquid separator such as a filter, a filter press, or a decanter (a centrifugal separator).

Even after the removal of the precipitate, a transition metal element which has not fully precipitated may still be present in the second solution. In an embodiment, slight amounts of aluminium, copper, and/or iron may still be included in the second solution. The elements that have not fully precipitated may be included in a third solution which will be prepared in a subsequent step.

In a method of recovering a lithium precursor according to the present disclosure, the first basic reagent may be used to replace an ordinary basic solution in preparing the second solution (S220). Thus, it may be advantageous to reduce an amount of basic solution, which may be harmful to the environment. The use of the first basic reagent including a high concentration of lithium ions may have an advantage of increasing the purity of a finally recovered lithium precursor. An ordinary recovery process of lithium precursors may be used without adding a separate process, and there may be an advantage of recovering lithium ions in a waste solution produced in a washing process of positive electrode active materials. The ordinary basic solution may be sodium hydroxide (NaOH) and/or sodium carbonate (Na₂CO₃).

The first basic reagent may be introduced at a relatively early step in an overall lithium precursor recovery process. Thus, lithium ions originating from the first basic reagent may be more concentrated through subsequent processes. For example, the lithium ions may be more concentrated through a step of preparing a third solution (S230) and a step of preparing a fourth solution (S240). It may therefore be advantageous to further increase the purity of a finally recovered lithium precursor.

When an ordinary basic solution is used to prepare the second solution, a sodium ion originated from the basic solution may act as an impurity ion. This may reduce a concentration of lithium ions in the second solution. Thus, there may occur a problem of a reduction in purity of a finally recovered lithium precursor. In addition, the sodium ion may be incorporated in the form of sodium sulfate (Na₂SO₄) into the finally recovered lithium precursor. This may additionally require a step of separating and removing sodium sulfate (Na₂SO₄) as an undesired recovered material, and there may be increased cost for overall recovery process.

### Preparation of Third Solution

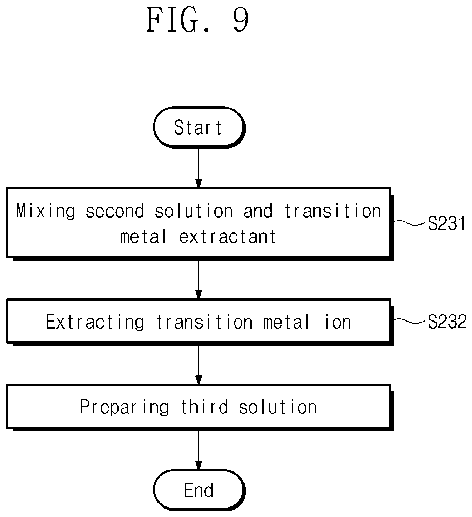

FIG. 11 is a flow chart showing a method of recovering a lithium precursor according to the present disclosure. FIG. 9 is a flow chart showing in detail a step of extracting a transition metal ion from a second solution to prepare a third solution (S230 of FIG. 11). With reference to FIGS. 9 and 11, the following will describe in detail a step S230 of preparing a third solution according to the present disclosure.

Referring to FIG. 9, a step of preparing a third solution may include mixing the second solution and a transition metal extractant (S231) and then extracting a transition metal ion (S232).

If necessary, after the extraction of the transition metal ion (S232), the step (S230) of preparing a third solution may further include obtaining lithium phosphate (Li₃PO₄) precipitated through filtration after introduction of sodium phosphate (Na₃PO₄), dissolving the lithium phosphate in a sulfuric acid solution, and removing iron phosphate (FePO₄) precipitated through filtration after introduction of ferric sulfate (Fe₂(SO₄)₃).

The transition metal extractant may include a phosphoric acid-based compound, a phosphinic acid-based compound, and/or a carboxylic acid-based compound. In an embodiment, the transition metal extractant may be di-(2-ethylhexyl)phosphoric acid (D2EHPA), bis(2,2,4-trimethylpentyl)phosphinic acid (CYANEX^{®} 272), and/or 2-ethylhexyl 2-ethylhexyphosphonic acid (PC88A).

The step of mixing the second solution and the transition metal extractant (S231) may be performed while sequentially increasing the pH. In an embodiment, manganese (Mn) may be extracted by introducing di-(2-ethylhexyl)phosphoric acid (D2EHPA) while maintaining the pH range of about 3 to about 4. Afterwards, sodium hydroxide (NaOH) may be introduced to adjust the pH to a range of 4 to 5, and then bis(2,2,4-trimethylpentyl)phosphinic acid (CYANEX^{®} 272) may be added to extract cobalt. Thereafter, sodium hydroxide (NaOH) may be introduced to adjust the pH to a range of about 5 to about 6, and then 2-ethylhexyl 2-ethylhexyphosphonic acid (PC88A) may be added to extract nickel.

As discussed above, if necessary, manganese (Mn) may be extracted in advance immediately after the filtering and dissolving step S212.

A saponified transition metal extractant may be used instead of the transition metal extractant. The mechanism of extracting transition metals with the transition metal extractant may include the substitution of hydrogen ions of the transition metal extractant with transition metal ions and the combination of the substituted transition metal ions with anions of the transition metal extractant. In such a case, as hydrogen ions separated from the transition metal extractant cause a reduction in pH, it may not be easy to perform the transition metal extraction while sequentially increasing the pH. Thus, to compensate, it may be possible to use a saponified transition metal extractant in which hydrogen ions of the transition metal extractant are substituted with sodium ions.

Even after the extraction of the transition metal ions (S232), a transition metal ion that has not fully precipitated may still be present. In an embodiment, slight amounts of aluminium, copper, and/or iron may still be present. The ions that have not fully precipitated may be included in a fourth solution which will be prepared in a subsequent step.

### Preparation of Fourth Solution

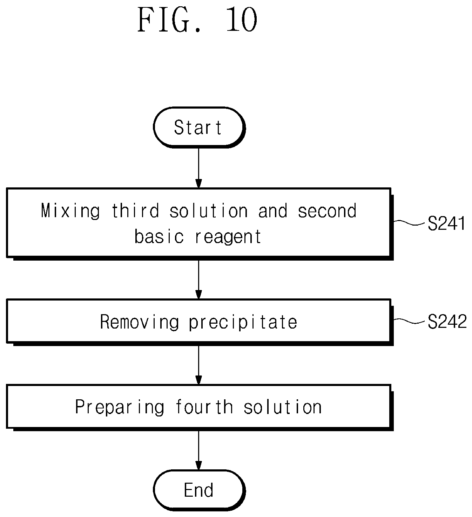

FIG. 11 is a flow chart showing a method of recovering a lithium precursor according to the present disclosure. FIG. 10 is a flow chart showing in detail a step of mixing a third solution and a second basic reagent to prepare a fourth solution (S240 of FIG. 11). With reference to FIGS. 10 and 11, the following will describe in detail a step S240 of preparing a fourth solution according to the present disclosure.

Referring to FIG. 10, a step of preparing a fourth solution may include mixing the third solution and a second basic reagent (S241) and removing a precipitate produced after the mixing (S242).

The second basic reagent may be prepared using a waste solution produced in a washing process of a positive electrode active material. Alternatively, the second basic reagent may be an ordinary basic solution. The ordinary basic solution may be sodium hydroxide (NaOH) and/or sodium carbonate (Na₂CO₃). When the second basic reagent is prepared using a waste solution produced in a washing process of a positive electrode active material, the second basic reagent may be prepared using the same method used for preparing the first basic reagent.

The step of mixing the third solution and the second basic reagent (S241) may be performed while ensuring that a lithium concentration in the fourth solution does not fall to or below about 3,000 ppm. The concentration of lithium contained in the fourth solution may indicate a mass of lithium included in the fourth solution relative to the total mass of the fourth solution.

The step of mixing the third solution and the second basic reagent (S241) may be performed while the fourth solution maintains a pH range of about 7 to about 11.

When the mixing is performed with the concentration and pH conditions of lithium of the fourth solution, it may be possible to create an environment where precipitation of lithium ions is hindered while precipitation of ions other than lithium ions is facilitated. Through this step, impurity ions excluding lithium ions may be extracted and lithium ions may not be extracted. Thus, it may be possible to achieve high purity of a lithium precursor which will be obtained below.

A precipitate produced after the mixing of the third solution and the second basic reagent (S242) may be removed. The precipitate may include a material that remains without being fully precipitated in the step S220 of preparing the second solution. The precipitate may include an element other than manganese, cobalt, and nickel among transition metals. In an embodiment, the precipitate may include iron, aluminium, copper, zinc, magnesium, and/or calcium.

The precipitate may include a material that remains without being fully precipitated in the step S230 of preparing the third solution. In an embodiment, the precipitate may include manganese, cobalt, and/or nickel.

The precipitate may include divalent and/or trivalent transition metals in the form of hydroxide. For example, the precipitate may include aluminium hydroxide (Al(OH)₃) and/or cobalt hydroxide (Co(OH)₂). The precipitate may be formed when a hydroxide ion (OH⁻) originating from the fourth solution is combined with a bivalent transition metal ion and/or a trivalent transition metal ion.

The removal of the precipitate may include filtration. In an embodiment, the filtration of the precipitate may be accomplished by using a solid-liquid separator such as a filter, a filter press, or a decanter (a centrifugal separator).

In a method of recovering a lithium precursor according to the present disclosure, an ordinary basic solution may be replaced with the second basic reagent prepared using a waste solution produced in a washing process of a positive electrode active material. Thus, it may be advantageous to reduce an amount of basic solution, which may be harmful to the environment, and there may be an advantage of increased purity of a finally recovered lithium precursor. There may be an advantage in utilizing the existing lithium precursor recovery process without adding a separate process to recover lithium ions from the waste liquid generated in the cathode material purification process.

In a method of recovering a lithium precursor according to the present disclosure, all of the first basic reagent and the second basic reagent may be prepared using a waste solution produced in a washing process of a positive electrode active material. This may have an effect of achieving high concentration of lithium ions twice in a process of recovering a lithium precursor. Accordingly, there may be an advantage of increased purity of a finally recovered lithium precursor.

### Extraction of Lithium Precursor

FIG. 11 is a flow chart showing a method of recovering a lithium precursor according to the present disclosure. With reference to FIG. 11, the following will describe in detail a step of extracting a lithium precursor according to the present disclosure.

A lithium precursor may be extracted from the fourth solution from which impurities are removed (S250). The lithium precursor may be lithium carbonate (Li₂CO₃) or lithium hydroxide (LiOH).

When a lithium precursor is extracted in the form of lithium carbonate (Li₂CO₃), alkali carbonate may be introduced to the fourth solution from which the impurities are removed. Afterwards, a lithium precursor in the form of lithium carbonate (Li₂CO₃) may be extracted through solid-liquid separation. In an embodiment, the alkali carbonate may be sodium carbonate (Na₂CO₃). The obtained lithium carbonate (Li₂CO₃) may be used as a raw material for low-nickel positive electrode active materials in which a molar ratio of nickel to other metal elements excluding lithium in the positive electrode active material is equal to or less than about 60%. In an embodiment, the low-nickel positive electrode active material may be LiNi_{0.6}Co_{0.2}Mn_{0.2}O₂.

When a lithium precursor is extracted in the form of lithium hydroxide (LiOH), alkali hydroxide may be introduced to the extracted lithium carbonate (Li₂CO₃). Afterwards, calcium carbonate (CaCO₃) may be removed through solid-liquid separation, and then a lithium precursor in the form of lithium hydroxide may be extracted through evaporation. In an embodiment, the alkali hydroxide may be calcium hydroxide (Ca(OH)₂). The obtained lithium hydroxide may be used as a raw material for high-nickel positive electrode active materials in which a molar ratio of nickel to other metal elements in the positive electrode active material excluding lithium is greater than about 60%. In an embodiment, the high-nickel positive electrode active material may be LiNi_{0.8}Co_{0.15}Al_{0.05}O₂.

A lithium precursor obtained according to the present disclosure may be used as a raw material for preparing a positive electrode active material. In such a case, a transition metal precursor used as a raw material for preparing a positive electrode active material may be expressed by Chemical Formula 3:

M9ᵢM10ⱼM11ₖM12ₗ(OH)₂

In Chemical Formula 3, i, j, k, and l may satisfy the relationship of 0≤i≤1, 0≤j≤1, 0≤k≤1, 0≤l≤1, and i+j+k+l=1. Each of M9, M10, M11, and M12 in Chemical Formula 3 may be an element selected from Ni, Co, Al, Cu, Mn, Ti, Mo, Zn, Zr, Si, Ge, V, Cr, B, Mg, Na, Sr, Ag, Nb, Ga, Ca, and Ba.

A lithium precursor recovered according to the present disclosure may have a high purity of lithium ions. A mass ratio of lithium ions in the recovered lithium precursor to the total mass of the recovered lithium precursor may be equal to or greater than about 99%.

The following will describe examples and comparative examples of the present disclosure. However, the following examples are merely illustrative examples of the present disclosure, and the present disclosure is not limited to the following examples.

### Embodiment 1: Preparation of First Basic Reagent

Ni_{0.6}Co_{0.2}Mn_{0.2}(OH)₂ and lithium hydroxide (LiOH) were mixed and then calcined to prepare a positive electrode active material. The positive electrode active material was washed with a washing solution, and thereafter a first waste solution was obtained. A solid substance in the first waste solution was filtered with 5 µm of paper filter to obtain a second waste solution. The second waste solution had a pH of 12.8. The second waste solution was evaporated until the pH reached 15 to prepare a first basic reagent. The first waste solution and the first basic reagent were analyzed and the results are listed in Table 1 below.

### Embodiment 2: Preparation of First Solution

LiNi_{0.8}Co_{0.15}Al_{0.05}O₂ as a discarded lithium transition metal composite oxide, sulfuric acid (H₂SO₄), an oxidizer (H₂O₂), and water were mixed in a weight ratio of 1:1.5:0.5:3. A solid-liquid separation was carried out to prepare a lithium transition metal solution. A pH of the lithium transition metal solution was 1.1.

Sodium hydroxide was added to the lithium transition metal solution to adjust the pH to 3. Di-(2-ethylhexyl)phosphoric acid (D2EHPA) as an alkyl phosphoric acid-based transition metal extractant was diluted with kerosene to 25 vol%, and manganese was then extracted and removed through solvent extraction. A first solution was thereby prepared. The lithium transition metal solution and the first solution were analyzed and the results are listed in Table 2 below.

### Embodiment 3: Preparation of Second Solution

The first basic reagent of Embodiment 1 and the first solution of Embodiment 2 were mixed to adjust the pH to 5. Aluminium precipitated and was removed. An oxidizer (H₂O₂) was added to reduce the pH to 4. Iron precipitated and was removed. A second solution was thereby prepared. The second solution was analyzed and the results are listed in Table 3 below.

### Comparative Example 1: Preparation of Second Comparative Solution

A second comparative solution was prepared by the same method as in Embodiment 3, except that sodium hydroxide (NaOH) was added instead of the first basic reagent of Embodiment 1. The second comparative solution was analyzed and the results are listed in Table 3 below.

### Embodiment 4: Preparation of Third Solution

Sodium hydroxide (NaOH) was added to the second solution of Embodiment 3, thereby adjusting the pH to 5. Bis(2,2,4-trimethylpentyl)phosphinic acid (Cyanex^{®} 272) was diluted with kerosene to 25 vol%, and cobalt (Co) was then extracted and removed through solvent extraction. Sodium hydroxide (NaOH) was added to adjust the pH to 7. 2-ethylhexyl 2-ethylhexyphosphonic acid (PC88A) was diluted with kerosene to 25 vol%, and nickel (Ni) was then extracted and removed through solvent extraction.

Sodium phosphate (Na₃PO₄) was added to a solution from which the transition metal is removed, and precipitated lithium phosphate (Li₃PO₄) was then obtained. The lithium phosphate was dissolved in a sulfuric acid (H₂SO₄) solution. Ferric sulfate (Fe₂(SO₄)₃) was added to the dissolved solution, and precipitated iron phosphate (FePO₄) was removed through filtration. A third solution was thereby prepared.

### Comparative Example 2: Preparation of Third Comparative Solution

A third comparative solution was prepared by the same method as in Embodiment 4, except that the second comparative solution of Comparative Example 1 was used instead of the second solution of Embodiment 3.

### Embodiment 5-1: Preparation of Fourth Solution (I)

Sodium hydroxide (NaOH) was added to the third solution of Embodiment 4, thereby adjusting the pH to 10. A precipitate was removed through solid-liquid separation. A fourth solution was thereby prepared.

### Embodiment 5-2: Preparation of Fourth Solution (II)

A fourth solution was prepared by the same method as in Embodiment 5-1, except that the first basic reagent of Embodiment 1 was added instead of sodium hydroxide (NaOH).

### Comparative Example 3: Preparation of Fourth Comparative Solution

A fourth comparative solution was prepared by the same method as in Embodiment 5-1, except that the third comparative solution of Comparative Example 2 was used instead of the third solution of Embodiment 4.

### Embodiment 6-1: Extraction of Lithium Precursor (I)

Sodium carbonate (Na₂CO₃) was added to the fourth solution of Embodiment 5-1. A lithium precursor in the form of lithium carbonate (Li₂CO₃) was extracted through solid-liquid separation.

The extracted lithium precursor was washed with water to remove sodium from the extracted lithium precursor. A temperature of the water was 85 °C, and mass of the used water was twice that of the extracted lithium precursor. The extracted lithium precursor was analyzed and the results are listed in Table 4 below.

### Embodiment 6-2: Extraction of Lithium Precursor (II)

A lithium precursor in the form of lithium carbonate (Li₂CO₃) was extracted and washed by the same method as in Embodiment 6-1, except that the fourth solution of Embodiment 5-2 was used instead of the fourth solution of Embodiment 5-1. The extracted lithium precursor was analyzed and the results are listed in Table 4 below.

### Comparative Example 4: Extraction of Lithium Precursor (III)

A lithium precursor in the form of lithium carbonate (Li₂CO₃) was extracted and washed in the same method as in Embodiment 6-1, except that the fourth solution of Comparative Example 3 was used instead of the fourth solution of Embodiment 5-1. The extracted lithium precursor was analyzed and the results are listed in Table 4 below.

### Embodiment 7-1: Preparation of Positive Electrode Active Material (I)

A positive electrode active material was prepared using lithium carbonate (Li₂CO₃) of Embodiment 6-1.

A nickel sulfate (NiSO₄) aqueous solution, a cobalt sulfate (CoSO₄) aqueous solution, and a manganese sulfate (MnSO₄) aqueous solution were mixed so that a molar ratio of nickel, cobalt, and manganese became 0.6:0.2:0.2. Sodium hydroxide (NaOH) and, as a coprecipitation chelating agent, ammonium hydroxide (NH₄OH) were added to the mixed solution to prepare a transition metal precursor, Ni_{0.6}Co_{0.2}Mn_{0.2}(OH)₂, through coprecipitation.

The Ni_{0.6}Co_{0.2}Mn_{0.2}(OH)₂ and the lithium carbonate (Li₂CO₃) of Embodiment 6-1 were mixed in such a way that a molar ratio of nickel, cobalt, manganese, and lithium became 0.6 : 0.2 : 0.2 : 1.1, and the mixture was calcined to prepare a positive electrode active material. The positive electrode active material was washed to remove lithium that remained on a surface of the positive electrode active material. Lithium carbonate (Li₂CO₃) of Embodiment 6-1 was additionally added to compensate for excessively washed lithium, and the result was calcined at 750 °C. Thus, an NCM622 positive electrode active material and LiNi_{0.6}Co_{0.2}Mn_{0.2}O₂, were obtained.

### Embodiment 7-2: Preparation of Positive Electrode Active Material (II)

An NCM622 positive electrode active material was prepared by the same method as in Embodiment 7-1, except that lithium carbonate (Li₂CO₃) of Embodiment 6-2 was used instead of lithium carbonate (Li₂CO₃) of Embodiment 6-1.

### Comparative Example 5: Preparation of Positive Electrode Active Material (III)

An NCM622 positive electrode active material was prepared by the same method as in Embodiment 7-1, except that lithium carbonate (Li₂CO₃) of Comparative Example 4 was used instead of lithium carbonate (Li₂CO₃) of Embodiment 6-1.

### Embodiment 8-1: Fabrication of Rechargeable Lithium Battery (I)

A rechargeable lithium battery was fabricated using the positive electrode active material (NCM622) of Embodiment 7-1. 97 wt% of the positive electrode active material of Embodiment 7-1, 1.5 wt% of polyvinylidene fluoride as a binder, and 1.5 wt% of carbon black as a conductive material were mixed in a solvent of N-methylpyrrolidone to prepare a positive electrode active material slurry. An aluminium current collector having a thickness of 15 µm was coated with the positive electrode active material slurry such that 15 mg per 1 cm² of coating was provided on the current collector, and the current collector was then dried and roll-pressed to manufacture a positive electrode.

A 2032-type coin half-cell was manufactured using the positive electrode and a lithium metal counter electrode. A separator formed of a porous polyethylene (PE) film was interposed between the positive electrode and the lithium metal counter electrode, and an electrolyte was introduced to fabricate a rechargeable lithium battery. The electrolyte included a lithium salt of 1.3M LiPF₆ and an organic solvent that includes ethylene carbonate (EC) and diethyl carbonate (DEC) mixed in a volume ratio of 1:1.

### Embodiment 8-2: Fabrication of Rechargeable Lithium Battery (II)

A rechargeable lithium battery was fabricated by the same method as in Embodiment 8-1, except that the positive electrode active material of Embodiment 7-2 was used instead of the positive electrode active material of Embodiment 7-1.

### Comparative Example 6: Fabrication of Rechargeable Lithium Battery (III)

A rechargeable lithium battery was fabricated by the same method as in Embodiment 8-1, except that the positive electrode active material of Comparative Example 5 was used instead of the positive electrode active material of Embodiment 7-1.

### Evaluation 1: Analysis on Components of Solution (I)

Compositions of solutions in each step of Embodiment 1 were analyzed, and results are listed in Table 1.

**Table 1**

| | Li | Na | Al | Cu | Ni | Co | Mn | Fe | SO₂²⁻ | PO₄³⁻ | Ca | Mg |
|---|---|---|---|---|---|---|---|---|---|---|---|---|
| First waste solution | 2879 | 5934 | N/D | N/D | 2 | 2 | 1 | N/D | 5192 | N/D | N/D | 1 |
| First basic reagent | 6725 | 13861 | N/D | N/D | 3 | 4 | 2 | N/D | 12128 | N/D | N/D | 2 |

The units in Table 1 are ppm
and N/D means no detection.

Referring to Table 1, it can be seen that a lithium concentration was greater in the first basic reagent than in the first waste solution. In this sense, it may be ascertained that the first basic reagent containing a high amount of lithium ions was prepared to extract high-purity lithium in a subsequent process.

### Evaluation 2: Analysis on Components of Solution (II)

Compositions of solutions in each step of Embodiment 2 were analyzed and the results are listed in Table 2.

**Table 2**

| | Li | Na | Al | Cu | Ni | Co | Mn | Fe | SO₂²⁻ | PO₄³⁻ | Ca | Mg |
|---|---|---|---|---|---|---|---|---|---|---|---|---|
| Lithium transition metal solution | 10973 | 27 | 106 | 3 | 54178 | 18830 | 18556 | 17 | 209415 | N/D | 2 | 3 |
| First solution | 9148 | 28384 | 94 | 1 | 46391 | 15943 | 37 | 15 | 178319 | N/D | 2 | 2 |

The units in Table 2 are ppm and N/D means no detection.

Referring to Table 2, it may be seen that the first solution included lithium ions and transition metal.

### Evaluation 3: Analysis on Components of Solution (III)

Components of the second solution of Embodiment 3 and the second comparative solution of Comparative Example 1 were analyzed and the results are listed in Table 3.

**Table 3**

| | Li | Na | Al | Cu | Ni | Co | Mn | Fe | SO₂²⁻ | PO₄³⁻ | Ca | Mg |
|---|---|---|---|---|---|---|---|---|---|---|---|---|
| Embodiment 3 | 8556 | 32692 | 3 | N/D | 21 | 15 | 3 | 2 | 146865 | N/D | 1 | 2 |
| Comparative Example 1 | 7410 | 46581 | 5 | N/D | 25 | 12 | 4 | 3 | 141449 | N/D | 1 | 1 |

The units in Table 3 are ppm and N/D means no detection.

Referring to Table 3, it may be seen that the second solution of Embodiment 3 included a larger amount of lithium than the second comparative solution of Comparative Example 1 and that the second solution of Embodiment 3 included a smaller amount of sodium than the second comparative solution of Comparative Example 1. These component characteristics of the second solution may contribute to increasing an amount of lithium and decreasing an amount of sodium contained in a finally obtained lithium precursor and to acquiring a high-purity lithium precursor.

### Evaluation 4: Analysis on Components of Lithium Precursor

Components of the lithium precursors of Embodiment 6-1, Embodiment 6-2, and Comparative Example 4 were analyzed and the results are listed in Table. 4. In Table 4, purity may refer to a weight of lithium ions relative to the total weight of the lithium precursor.

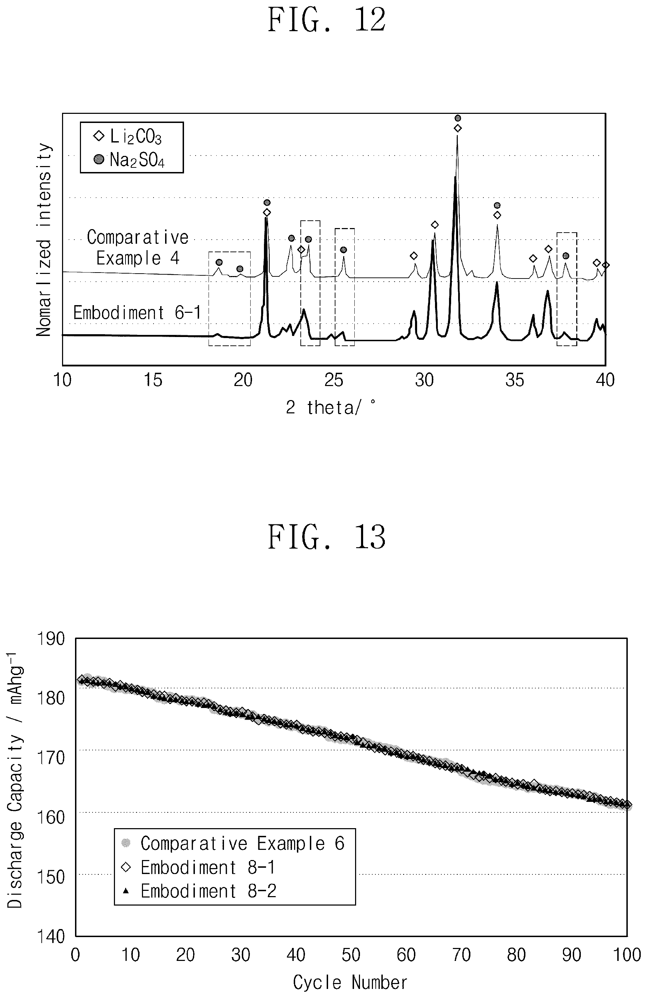

FIG. 12 shows analysis results of X-ray diffraction (XRD) for the lithium precursors of Embodiment 6-1 and Comparative Example 4.

**Table 4**

| | Purity (%) | Na | Al | Cu | Ni | Co | Mn | Fe | SO₂²⁻ | PO₄³⁻ | Ca | Mg |
|---|---|---|---|---|---|---|---|---|---|---|---|---|
| Embodiment 6-1 | 99.9 | 355 | 1 | N/D | 2 | 1 | 1 | 12 | 1312 | 198 | 59 | 32 |
| Embodiment 6-2 | 99.9 | 263 | N/D | N/D | 1 | N/D | N/D | 10 | 1258 | 193 | 45 | 30 |
| Comparative Example 4 | 99.6 | 808 | 1 | N/D | 1 | N/D | 1 | 13 | 1397 | 268 | 76 | 43 |

The units in Table 4 are ppm and N/D means no detection.

Referring to Table 4, it can be seen that purity of the lithium precursor in each of Embodiments 6-1 and 6-2 was greater than that of the lithium precursor in Comparative Example 4. It may also be observed that a concentration of the sodium ion in each of Embodiments 6-1 and 6-2 was less than that of the sodium ion in Comparative Example 4. In this sense, it may be ascertained that a high-purity lithium precursor was obtained according to an embodiment of the present disclosure.

Referring still to Table 4, it may be observed that a concentration of the sodium ion in Embodiment 6-2 was less than that of the sodium ion in Embodiment 6-1. For example, it may be ascertained that there was an effect to reduce a concentration of impurity ions when sodium hydroxide (NaOH) was replaced with a waste solution produced from a washing process of a positive electrode active material according to the present disclosure.

Referring to FIG. 12, it may be observed that an amount of a sodium compound (e.g., Na₂SO₄) included in the lithium precursor of Embodiment 6-1 was excessively less than that of a sodium compound (e.g., Na₂SO₄) included in the lithium precursor of Comparative Example 4. In this sense, it may be ascertained that a high-purity lithium precursor was possibly obtained according to an embodiment of the present disclosure.

### Evaluation 5: Battery Characteristics

The characteristics of the rechargeable lithium batteries in Embodiment 8-1, Embodiment 8-2, and Comparative Example 6 were evaluated.

Each rechargeable lithium battery was initially charged at 25 °C under conditions of constant current (0.2 C) and constant voltage (4.25 V, 0.05C cut off), and, after resting for 10 minutes, the rechargeable lithium battery was initially discharged under conditions of constant current (0.2 C) until a voltage reached 2.5 V. Afterwards, charge and discharge were repeated 100 times at 25 °C under 0.2 C (4.25 V, cut off at about 0.05 C) / 0.2 C (2.5 V, cut off at about 0.05 C ) conditions. Table 5 and FIG. 13 show evaluation results of battery characteristics.

**Table 5**

| | Initial discharge capacity (mAh·g⁻¹) | Initial efficiency (%) | 100^{th} discharge capacity (mAh·g⁻¹) | Capacity retention rate at room temperature (%, 100^{th}) |
|---|---|---|---|---|
| Embodiment 8-1 | 181.6 | 90.7 | 161.4 | 88.9 |
| Embodiment 8-2 | 181.4 | 90.6 | 161.5 | 89.0 |
| Comparative Example 6 | 181.3 | 90.6 | 161.0 | 88.8 |

Referring to Table 5 and FIG. 13, it can be seen that, as compared to the rechargeable lithium battery of Comparative Example 6, the rechargeable lithium batteries of Embodiment 8-1 and Embodiment 8-2 were similar or superior in terms of initial charge/discharge capacity, initial efficiency, 100^{th} discharge capacity, and capacity retention rate at room temperature. Thus, it may be ascertained that a method of recovering a lithium precursor according to the present disclosure is capable of achieving all the objects specified at the outset of the disclosure and is also capable of being used in the fabrication rechargeable lithium batteries that will have performance characteristics that are similar or superior to that of other rechargeable lithium batteries.

In a method of recovering a lithium precursor according to the present disclosure, a basic reagent may be prepared from a waste solution produced in a washing process of a positive electrode active material and may be introduced into a lithium precursor recovery procedure. It may thus be possible to reduce the use of alkaline solutions in the lithium precursor recovery procedure, to facilitate easy recovery of lithium from the waste solution without the need for additional processes, and to recover high-purity lithium precursors.

Moreover, the basic reagent may be prepared to contain a high concentration of lithium ions and not to contain impurity ions, and it may thus be possible to omit an additional step of separating and removing undesired recovered materials originated from the impurity ions.

While this disclosure has been described in connection with what is presently considered to be preferred embodiments, it is to be understood that the present disclosure is not limited to the disclosed embodiments and covers various modifications and equivalent arrangements. Therefore, the aforementioned embodiments should be understood to be examples and not limiting to this disclosure.

## Claims

1. A method of recovering a lithium precursor, the method comprising:
preparing a first solution that includes lithium ions and transition metal ions;
preparing a second solution by mixing the first solution and a first basic reagent;
preparing a third solution by extracting a transition metal from the second solution;
preparing a fourth solution by mixing the third solution and a second basic reagent; and
extracting the lithium precursor from the fourth solution,
wherein the first basic reagent is prepared using a waste solution produced in a washing process of a positive electrode active material.

2. The method of claim 1, wherein the second basic reagent is prepared using a waste solution produced in a washing process of a positive electrode active material.

3. The method of claim 1 or claim 2, wherein preparation of the first solution includes dissolving a discarded lithium transition metal composite oxide in an acidic solution,
wherein the discarded lithium transition metal composite oxide originates from a powdered discarded rechargeable lithium battery or waste generated during a fabrication process of a rechargeable lithium battery,
wherein the discarded lithium transition metal composite oxide includes a compound of Chemical Formula 1:
LiM1ₐM2_{b}M3_{c}M4_{d}O₂
with 0≤a≤1, 0≤b≤1, 0≤c≤1, 0≤d≤1, and a+b+c+d=1, and with each of M1, M2, M3, and M4 being selected from Ni, Co, Al, Cu, Mn, Ti, Mo, Zn, Zr, Si, Ge, V, Cr, B, Mg, Na, Sr, Ag, Nb, Ga, Ca, and Ba.

4. The method of any one of claims 1 to 3, wherein preparation of the first basic reagent includes:
washing a calcined positive electrode active material with a washing solution;
removing a solid substance by recovering a waste solution generated after the washing; and
adjusting the waste solution to a pH of about 8 to about 16.

5. The method of claim 4, wherein removing the solid substance from the waste solution includes using a decanter, a filter, or a filter press,
wherein the filter or the filter press comprises a filter paper having a pore size of about 0.5 µm to about 5 µm.

6. The method of claim 4 or claim 5, wherein adjusting the pH of the waste solution includes one of:
introducing alkali hydroxide to the waste solution; and
evaporating the waste solution.

7. The method of any one of claims 1 to 6, wherein a pH of the first basic reagent is about 12 to about 16.

8. The method of any one of claims 1 to 7, wherein the first basic reagent includes one or both of lithium carbonate (Li₂CO₃) and lithium hydroxide (LiOH).

9. The method of any one of claims 1 to 8, wherein a mass of lithium ions in the first basic reagent is about 1,000 ppm to about 10,000 ppm relative to a total mass of the first basic reagent.

10. The method of any one of claims 1 to 9, wherein a mass of impurity ions in the first basic reagent is about 20 ppm to about 14,000 ppm relative to a total mass of the first basic reagent.

11. The method of any one of claims 1 to 10, wherein the washing process includes washing a positive electrode active material with the lithium precursor recovered by the method of any one of claims 1 to 10.

12. The method of any one of claims 1 to 11, wherein preparation of the second solution includes mixing the first solution and the first basic reagent to cause the second solution to have a pH of about 3 to about 4.

13. The method of any one of claims 1 to 12, wherein preparation of the fourth solution includes mixing the third solution and the second basic reagent while satisfying a condition that a mass of lithium in the fourth solution does not fall below about 3,000 ppm relative to a total mass of the fourth solution.

14. The method of any one of claims 1 to 13, wherein a mass ratio of lithium ions in the recovered lithium precursor to a total mass of the recovered lithium precursor is equal to or greater than about 99%.

15. A method of preparing a positive electrode active material for a rechargeable lithium battery, the method comprising:
mixing and calcining a transition metal precursor and a lithium precursor that is recovered by the method of any one of claims 1 to 14; and
washing the calcined mixture.
